# EUROPEAN PATENT APPLICATION

(11) **EP 4 343 994 A1**
(43) Date of publication of application: **27.03.2024**
(21) Application number: 22804673.6
(22) Date of filing: 17.05.2022
(51) Int. Cl.: H02G 9/04, H02G 1/06

(54) **TROUGH, METHOD FOR FIXING CABLE TO TROUGH STRUCTURE, STRUCTURE FOR FIXING CABLE TO TROUGH STRUCTURE, STRUCTURE FOR FIXING TROUGH LID TO TROUGH STRUCTURE, AND METAL FITTING FOR FIXING TROUGH LID**

(30) Priority: 17.05.2021 JP 2021083288
(71) Applicant: FURUKAWA ELECTRIC CO., LTD., Tokyo 100-8322 (JP)
(72) Inventor: HORI, Takashi, Tokyo 100-8322 (JP); KOZAWA, Satoshi, Tokyo 100-8322 (JP)
(74) Representative: Goddar, Heinz J.
(86) International application number: PCT/JP2022/020492
(87) International publication number: WO 2022/244762

(57) **Abstract**

A trough (1) has, in a cross-section perpendicular to the axial direction of the trough (1), approximately a letter-U shape formed by a bottom part (11) and side parts (9) on both sides erected at the ends in the width direction of the bottom part (11). The trough (1) comprises: a trough storage part (7); and a male part (3) and a female part (5) respectively provided at the two axial ends of the trough storage part (7). When a plurality of troughs (1) are arranged in a longitudinal direction and the troughs (1) adjacent to each other are to be connected, the male and female parts (3) and (5) can be fitted to each other by dropping the male part (3) from above into the female part (5). In the bottom part (11) of the trough (1), a plurality (pair) of through-holes (13) are provided at prescribed positions symmetrical in the width direction of the trough (1) so as to penetrate the bottom part (11) of the trough (1).

## Description

### TECHNICAL FIELD OF THE INVENTION

The present invention relates to a trough in which a cable is laid inside, a method for fixing the cable to a trough structure in which a plurality of the troughs are interconnected, a structure for fixing the cable, a structure for fixing a trough lid to the trough structure, and a metal fitting for fixing the trough lid.

### BACKGROUND OF THE INVENTION

With the recent spread of solar and wind power generation, geographical conditions for such power generation have been diversifying. For example, lands that can be used at low cost are limited, and this increases the number of cases in which facilities for such power generation are built on steep slopes or at the top of the steep hills.

Various structures for laying cables that are to be used for transmission of electricity from such steep slopes have been proposed and commercially available. For example, there is a method in which resin-made troughs are installed on a sloping land and a cable is laid inside the troughs.

However, when troughs are installed on a sloping land, the cable inside the troughs are disposed being inclined at a predetermined angle according to a sloping surface. Thus, the cable inside the troughs is unstable and the cable may curve depending on an angle of the slope. Thus, the cable is to be supported inside the troughs.

As a method for supporting a cable in a trough as above, for example, Patent Document 1 has proposed a method in which a cable is fixed by using a rope to a cable fixing member that is installed on a screen plate disposed on a trough bottom surface.

The cable fixing member in Patent Document 1 is a sliding cleat, and a bottom surface of the sliding cleat and an upper surface of the screen plate slide with each other. Thus, the cable can move in a direction perpendicular to a longitudinal direction of the trough while being fixed to the sliding cleat. Also in Patent Document 1, the bottom surface of the trough or the surface of the screen plate that is to be in contact with a surface of the sliding cleat is an aluminum anodized surface, which is further deposited with molybdenum particles, fluororesin particles, and vitreous particles. In this way, friction at the time of sliding the sliding cleat can be reduced.

Also, Patent Document 2 has proposed a plastic trough including a trough body and a trough cover that is put over the trough body, in which a bottom surface of the trough body is provided with drain holes and cable supporting stands.

In Patent Document 2, the cable supporting stands are formed integrally on the bottom surface of the trough body at predetermined intervals. In addition, band attaching parts are integrally formed on a side of the cable supporting stand, and a cable-fixing band is attached to the band attaching parts. The cable is disposed on the cable supporting stands and fixed with the cable-fixing band.

Also, Patent Document 3 has proposed a cable track in which an elastic member is disposed between a cable that is disposed inside a trough body and a rear surface of a trough lid that is put over the trough body.

In Patent Document 3, an upper surface of the elastic member is in contact with the rear surface of the trough lid, and a lower surface of the elastic member is in contact with an upper surface of the cable. Also, the elastic member is pressed by the rear surface of the trough lid and thus the elastic member presses the cable while being elastically deformed. By pressing the cable with the elastic member in this way, the elastic member provides resistance when the cable is pulled out from one side.

Patent Document 4 has also proposed a cable trough including a trough body for storing a cable and a trough lid that is to be put over the trough body. In the cable trough, a cable supporting member is provided on both side walls of the trough body, crossing over the cable.

In Patent Document 4, the cable supporting members are provided on both side walls of the trough body. A U-shaped band is fixed to the cable supporting member and the cable is hung by the U-shaped band and fixed with bolts. With this structure, the cable supporting member can hang and fix any types of desired cables with the U-shaped band.

### RELATED ART

### PATENT DOCUMENTS

[Patent Document 1] Japanese Unexamined Utility Model Application Publication No. S59-117232 (JP-UM- S59-117232)
[Patent Document 2] Japanese Unexamined Utility Model Application Publication No. S61-98330 (JP- UM -S61-98330)
[Patent Document 3] Japanese Unexamined Patent Application Publication No. 2017-38449 (JP-A-2017-3 8449)
[Patent Document 4] Japanese Unexamined Utility Model Application Publication No. S60-089728 (JP- UM -S60-089728)

### SUMMARY OF THE INVENTION

### (PROBLEMS TO BE SOLVED BY THE INVENTION)

However, the invention of Patent Document 1 uses the sliding cleat and its purpose is not to support the cable to begin with. Also, the invention of Patent Document 1 includes a sliding mechanism in a width direction, which uses a lot of components and thereby increases the cost.

Also, the invention of Patent Document 2 uses a lot of components such as the cable supporting stands and the cable fixing bands, and this increases the cost. Also, a large number of cable supporting stands are to be provided to prevent the cable from sagging inside the trough due to its own weight. Also, the fixing band is to be fixed to the band attaching parts with screws, and this deteriorates workability. Also, the cable supporting stand has a concave portion in the middle and this may cause a problem in that fixing of the plurality of cables is difficult.

Also, in the invention of Patent Document 3, the trough lid is pressed strongly to the trough body while pressing the elastic member, and the trough lid is fixed to the trough body using a metal fitting or the like in such the state. Since the trough lid presses the elastic member to the cable as above, workability of attaching the trough lid to the trough body is poor.

Also, in the invention of Patent Document 4, the cable supporting member is provided to the trough body and the U-shaped band is to be fixed to the cable supporting member. This makes the structure complex, with a lot of components. Also, each cable is to be fixed by the U-shaped band and this takes a lot of effort in fixing.

The present invention was made in view of such problems. It is an object of the present invention to provide a trough in which a cable can be fixed to a trough body with certainty in a simple structure, a method for fixing the cable to a trough structure, a structure for fixing the cable to the trough structure, a structure for fixing a trough lid to the trough structure, and a metal fitting for fixing the trough lid.

### (MEANS FOR SOLVING PROBLEMS)

To achieve the above object, a first aspect of the present invention is a trough including a trough storage part, a male part, and a female part. The male part is provided on a first axial end of the trough storage part, and the female part is provided on a second axial end of the trough storage part. The trough has side parts on both sides and a bottom part, forming a substantially letter-U shape in a cross section taken perpendicularly to an axial direction of the trough. When interconnecting the adjacent troughs, the male part is inserted down into the female part such that the male part and the female part can be fitted with each other. A plurality of through-holes penetrating the bottom part of the trough are formed in the bottom part of the trough. The through-holes are provided at least at one position in a longitudinal direction of the trough, being symmetrical in a width direction of the trough.

It is preferable that the through-holes are formed at least as a pair of through-holes in the bottom part of the male part.

When interconnecting the troughs by fitting the male part with the female part, it is preferable that a protrusion protruding from a top surface of the bottom part of the female part or from a rear surface of the bottom part of the male part is formed at a position on the top surface of the bottom part of the female part or on the rear surface of the bottom part of the male part, the position being corresponding mutually to a proximity of an outer edge on an outer side of a width direction of the through-hole.

When interconnecting the troughs by fitting the male part with the female part, the protrusion protruding from the top surface of the bottom part of the female part and the protrusion protruding from the rear surface of the bottom part of the male part may be formed at positions on the top surface of the bottom part of the female part and on the rear surface of the bottom part of the male part, each of the positions being corresponding mutually to the proximity of the outer edge on the outer side of the width direction of the through-hole, such that the protrusions do not interfere with each other.

The protrusion provided on the top surface of the bottom part of the female part may be provided so as to include a part at which an amount of protrusion of the protrusion gradually increases outwardly from a center side of the width direction, facing the through-hole, within a range between a position corresponding to the rear surface of the through-hole and the outer edge on the outer side of the rear surface of the through-hole.

Through-holes other than the through-holes may be formed at least in the trough storage part.

Grooves that are parallel to the longitudinal direction of the trough may be formed on the bottom part of the trough storage part at predetermined intervals in one or more lines, and a separator may stand on the grooves.

According to the first aspect of the present invention, the through-holes are formed in the bottom part of the trough body and a string-like member can be threaded through the through-holes. Thus, the string-like member can fix a cable to the bottom part of the trough body. Such the simple structure can fix the cable to the trough body with certainty without using many components. At this time, the through-holes are preferably formed at positions that are at a predetermined distance away from a center of the width direction of the trough, being provided at proximities of both side parts. In this way, the cable can be stably supported and fixed.

Also, if the through-holes are formed at the male part, the string-like member can be threaded into a space between the female part and the male part. Also, the bottom part of the female part covers the lower parts of the through-holes, and this can prevent intrusion of water or the like from the ground when the trough is directly disposed on the ground.

Also, at this time, by forming the protrusion on the rear surface of the male part or the top surface of the female part in the proximity of the outer edge on the outer side of the through-hole when fitting the male part and the female part of the trough body, or within the range between the position facing the through-hole in the top surface of the female part and the proximity of the outer edge on the outer side of the through-hole, the protrusion can function as a stopper or a guide of the string-like member when threading the string-like member from the rear surface side of the male part through the through-hole to the top surface side of the male part. This facilitates the insertion of the string-like member into the through-hole.

Also, in a case of forming the protrusion on the top surface of the bottom part of the female part, the protrusion is formed such that the amount of protrusion gradually increases outward from the center side of the width direction. This can efficiently guide the string-like member to the through-hole. This facilitates the insertion of the string-like member from the rear surface side of the male part through the through-hole to the top surface side of the male part.

Also, the through-holes may be formed at the trough storage part. The cable can still be fixed in the trough storage part if the through-holes are formed at the trough storage part.

Also, by forming the grooves in the bottom part of the trough storage part, the separator can stand on the grooves. The separator can section a plurality of cables, for example.

A second aspect of the present invention is a method for fixing a cable to a trough structure using the troughs according to the first aspect of the present invention. The method includes forming a space between the rear surface of the bottom part of the male part and the top surface of the bottom part of the female part in a trough structure in which the troughs are interconnected by fitting the male part and the female part, inserting the string-like member from an upper surface side of the bottom part of the male part into one of at least the pair of the through-holes that is on one side of the trough width direction and taking out the string-like member from the through-hole on the other side of the width direction to the upper surface side of the bottom part at the male part via the space between the rear surface of the bottom part of the male part and the top surface of the bottom part of the female part to the upper surface side of the bottom part of the male part, and fixing the cable mounted inside the trough to the bottom part of the male part by using the string-like member.

The string-like member may be a band-like member being curved in a predetermined direction with a predetermined curvature. The string-like member is often supplied as being wound in a coil having a predetermined curvature, and thus the string-like member has the curve with the predetermined curvature. If the string-like member has no curves, the string-like member can be bent to provide the predetermined curve thereto.

Because the string-like member has the predetermined curvature as above, when inserting from above the string-like member into one of the through-holes in the width direction of the trough through to the other through-hole to be taken out, the string-like member can be inserted into the trough just by moving the string-like member back and forth from above, without reaching a hand under a rear surface of the trough to insert an end of the string-like member into the through-hole.

According to the second aspect of the present invention, the string-like member is threaded via the space between the male part and the female part into the through-holes, and this prevents the string-like member from coming into contact with the ground. Also, only the string-like member that is inserted into the through-holes fixes the cable, and thus the fixing work is easy. Also, the string-like member is inserted into the through-holes after interconnecting the troughs together to form the trough structure and laying the cable. This prevents the string-like member from becoming an obstruction when laying the cable, and, in addition, from falling off when the cable is inserted.

Also, if the string-like member is the band-like member having the curve in the predetermined direction with the predetermined curvature when no external force is applied thereto, the work of inserting the string-like member into the through-holes from the rear surface side to the front surface side of the male part can be easy.

A third aspect of the present invention is a structure for fixing a cable to a trough structure in which the cable is fixed to the trough structure that is formed by interconnecting a plurality of troughs. Each of the plurality of troughs includes a trough storage part, a male part, and a female part. The male part is provided on a first axial end of the trough storage part, and the female part is provided on a second axial end of the trough storage part. When interconnecting the adjacent troughs, the male part is inserted down into the female part such that the male part and the female part can be fitted with each other. Each of the troughs has side parts on both sides and a bottom part, forming a substantially letter-U shape in a cross section taken perpendicularly to an axial direction of the troughs. At least a pair of through-holes are formed in a bottom part of each of the troughs at a predetermined position, being symmetrical in a width direction of the troughs. At least either of a protrusion that is formed on a top surface of a bottom part of the female part so as to include a part at which an amount of protrusion thereof gradually increases outwardly from a center side of a width direction within a range between a position corresponding to a rear surface of the through-hole of the male part and an outer edge on the outer side of the rear surface of the through-hole, and a protrusion that protrudes from the rear surface of the bottom part and is formed at a position corresponding mutually to a proximity of an outer edge on an outer side of the through-hole in the rear surface of the bottom part of the male part is provided so as not to interfere with each other. The trough structure includes the troughs that are interconnected by fitting the male part with the female part, and the trough structure has a space created between the rear surface of the bottom part of the male part and the top surface of the bottom part of the female part. A string-like member ties and covers the through-hole on one side of the width direction of the troughs, a space created by the space between the rear face side of the bottom part of the male part and the top surface of the bottom part of the female part, the through-hole on the other side of the width direction of the troughs, and an upper surface of the cable mounted on an upper surface of the bottom part of the male part so as to be fixed in a loop shape, thereby fixing the cable mounted inside the troughs to the bottom parts of the male parts of the multiple troughs at predetermined intervals.

In the structure for fixing the cable to the trough structure, the string-like member is inserted from an upper surface side of the bottom part of the male part into one of the pair of the through-holes that is on one side of the trough width direction, then inserted into the space between the rear surface of the bottom part of the male part and the top surface of the bottom part of the female part, and taken out, by being guided by the protrusion, from the through-hole on the other side of the width direction to the upper surface side of the bottom part at the male part to the upper surface side of the bottom part of the male part. The string-like member then wraps and covers the cable mounted inside the trough to fix the cable to the bottom part of the male part and the structure for fixing the cable to the trough structure can be obtained.

The trough structure may be laid on a slope surface, and, with the cable being fixed to the troughs by the string-like member, a dead weight of the cable may be supported in a direction parallel to the bottom parts of the troughs.

The structure for fixing the cable to the trough structure may include the multiple troughs being interconnected with each other, the cable mounted inside the troughs may be fixed to the multiple troughs at a fitting part of the troughs by using the string-like member, and a trough lid may be put over the trough structure.

According to the third aspect of the present invention, the cable can be fixed at predetermined intervals to the trough structure with certainty in a simple structure. Also, the protrusion that is formed on the top surface of the bottom part of the female part so as to include the part at which the amount of protrusion thereof gradually increases outwardly from the center side of the width direction within the range between the position corresponding to the rear surface of the through-hole of the male part and the outer edge on the outer side of the rear surface of the through-hole, or the protrusion that protrudes from the rear surface of the bottom part and is formed at the position corresponding mutually to the proximity of the outer edge on an outer side of the through-hole in the rear surface of the bottom part of the male part can guide the string-like member, and this facilitates insertion of the string-like member into the through-hole. Also, the male part is on top of the female part and the string-like member is inserted into the space between the male part and the female part. Thus, lower parts of the through-holes are not exposed to the ground, thereby preventing intrusion of water or the like from the through-holes.

Also, if the trough structure is laid on a slope surface, the cable is fixed by the string-like member and the dead weight of the cable can be supported in the direction parallel to the bottom parts of the troughs.

Also, the cable is fixed to the multiple troughs at the fitting part of the troughs in the trough structure, in which the multiple troughs are interconnected with each other, by using the string-like member, and thus the cable can be fixed to the trough body with certainty at predetermined intervals.

A fourth aspect of the present invention is a structure for fixing a trough lid to the trough structure, which includes the structure for fixing the cable to the trough structure according to the third aspect of the present invention. A metal fitting for fixing the trough lid includes a metal-fitting fixing part and a buckle. Each of predetermined front and back positions of an axial direction of the trough has a metal-fitting mounting part for mounting the metal fitting. The metal-fitting mounting part is formed on an outer side of each of the side parts at an upper part of the trough with a predetermined thickness and a predetermined length. The metal-fitting fixing part of the metal fitting is mounted onto the metal-fitting mounting part. The trough lid includes a buckle-fixing groove formed on a top surface of the trough lid on each side of a position corresponding, in an axial direction of the trough, to the metal-fitting mounting part. The buckle of the metal fitting is fixed into the buckle-fixing groove such that the trough lid put over the trough is fixed to the trough.

The metal-fitting fixing part may be formed of a plate-shaped metal member having a predetermined width. The metal-fitting fixing part includes bent parts that are substantially parallel to each other and are provided on both upper and lower sides of a linking part, thereby forming an approximately letter-U shape. Furthermore, a folded part is provided at a tip end of the upper bent part such that the folded part is substantially parallel to the upper bent part and is folded back toward the linking part. The metal-fitting fixing part is formed substantially in a letter-S shape with the letter-U shape and the folded part, and is provided with a buckle-fixing part for fixing the buckle, which is formed by bending a tip end part of the folded part in a loop shape so that the buckle can be supported. The buckle has an L-shaped part formed of long sides and short sides that are bent at substantially right angles at tip end parts of the long sides. Tip ends of the short sides of the couple of L-shaped parts that are parallel to each other are bent at right angles respectively so as to be connected at a connecting part, and the short sides and the connecting part are formed into a substantially letter-U shape as a unified body. Each of the tip end parts of the long sides of the L-shaped parts is bent at right angles for a predetermined length so as to face each other, being parallel to the connecting part, and predetermined lengths of the tip end parts of long sides of the L-shaped parts on both sides of the buckle are inserted into the buckle-fixing part such that the buckle is rotably supported by the buckle-fixing part. The metal-fitting mounting part of the trough is placed between the pair of bent parts, which are substantially parallel to each other and formed in the metal-fitting fixing part of the metal fitting, so that the metal fitting is mounted onto the trough. When the trough lid is to be fixed to the trough by using the metal fitting, the buckle is rotated and the short sides and the connecting part are fitted into the buckle-fixing groove so that the trough lid may be fixed to the trough.

According to the fourth aspect of the present invention, by using the metal fitting that can fix the trough lid, the trough and the trough lid can be fixed easily in a simple structure, in which no bolts or nuts are used and no tools are required, thereby facilitating the installation. Also, since the metal fitting is formed of the metal-fitting fixing part and the buckle, fixing to the trough is easy and the buckle can fix the trough lid to the trough with certainty.

In particular, when mounting the buckle to the trough lid, the buckle can be lifted up slightly, resisting spring force of the bent portion of the metal-fitting fixing part, to be mounted on and fixed to the substantially letter-U shaped buckle-fixing groove provided in the trough lid. Also, even if a force trying to remove the trough lid from the trough is applied, since the short sides and the connecting part of the buckle are fitted into the buckle-fixing groove, the spring force of the bent parts of the metal fitting presses and fix the short sides and the connecting part to a groove face of the buckle-fixing groove so as to be kept in contact with the groove face of the buckle-fixing groove. Thus, the buckle is not removed from the buckle-fixing groove formed in the trough lid.

Also, a locking hook may be provided on the lower bent part of the metal-fitting fixing part. The locking hook protrudes inward at an angle. This can fix the metal fitting strongly to the trough.

A fifth aspect of the present invention is a metal fitting for fixing a trough lid to a trough. The metal fitting includes a metal-fitting fixing part and a buckle. The metal-fitting fixing part is formed of a plate-shaped metal member having a predetermined width. The metal-fitting fixing part includes bent parts that are substantially parallel to each other and are provided on both upper and lower sides of a linking part, thereby forming an approximately letter-U shape. Furthermore, a folded part is provided at a tip end of the upper bent part such that the folded part is substantially parallel to the upper bent part and, at the same time, is folded back toward the linking part. The metal-fitting fixing part is formed substantially in a letter-S shape with the letter-U shape part and the folded part, and is provided with a buckle-fixing part for fixing the buckle, which is formed by bending a tip end part of the folded part into a loop shape. The buckle has an L-shaped part formed of long sides and short sides that are bent at substantially right angles at tip end parts of the long sides. Tip ends of the short sides of the couple of L-shaped parts that are parallel to each other are bent at right angles respectively so as to be connected at a connecting part, and the short sides and the connecting part are formed into a substantially letter-U shape as a unified body. Each of the tip end parts of the long sides of the L-shaped parts is bent at right angles for a predetermined length so as to face each other, being parallel to the connecting part, and predetermined lengths of the tip end parts of long sides of the L-shaped parts on both sides of the buckle are inserted into the buckle-fixing part such that the buckle is rotably supported by the buckle-fixing part.

A plurality of locking hooks facing toward an inside of the bent parts and standing at a sharp angle may be formed on the lower bent part of the metal-fitting fixing part. The plurality of the locking hooks are formed at positions that are predetermined distance away from each other in a width direction of the bent part.

According to the fifth aspect of the present invention, by using the metal fitting that can fix the trough lid, the trough and the trough lid can be fixed easily in a simple structure, in which no bolts or nuts are used and no tools are required, thereby facilitating the installation.

### (EFFECTS OF THE INVENTION)

The present invention can provide a trough in which a cable can be fixed to a trough body with certainty in a simple structure, a method for fixing the cable to a trough structure, a structure for fixing the cable to the trough structure, a structure for fixing a trough lid to the trough structure, and a metal fitting for fixing the trough lid. The present invention allows to support the cable stably in the troughs, to a certain extent, on slopes or in the event of an earthquake. Also, fixing of the cable to the trough structure is easy, and thus the method for fixing the cable to the trough structure and the structure for fixing the cable to the trough structure can be easily obtained.

### BRIEF DESCRIPTION OF DRAWINGS

FIG. 1 is a perspective view showing a trough 1.
FIG. 2 is a cross-sectional view taken along A-A line in FIG. 1.
FIG. 3A is a plan view showing a structure for fixing a cable, in which a cable 19 is fixed to a trough structure 20.
FIG. 3B is a partially enlarged view of FIG. 3A.
FIG. 4A is a view showing a method for fixing the cable 19 to the trough 1.
FIG. 4B is a view showing the method for fixing the cable 19 to the trough 1.
FIG. 4C is a view showing the method for fixing the cable 19 to the trough 1.
FIG. 5 is a view showing another structure for fixing cables.
FIG. 6 is a view showing a state in which the trough structure 20 is installed on a slope.
FIG. 7 is a perspective view showing a trough 1a.
FIG. 8 is a partially enlarged view of a trough structure 20a in which the troughs 1a are interconnected with each other.
FIG. 9 is a cross-sectional view taken along E-E line in FIG. 8.
FIG. 10A is a view showing a method for fixing the cable 19 to the trough 1a.
FIG. 10B is a view showing the method for fixing the cable 19 to the trough 1a.
FIG. 10C is a view showing the method for fixing the cable 19 to the trough 1a.
FIG. 11A is a cross-sectional view of a trough structure 20b in which troughs 1b are interconnected with each other.
FIG. 11B a cross-sectional view of another embodiment of the trough structure 20b in which the troughs 1b are interconnected with each other.
FIG. 12 is an exploded perspective view of a trough 1c.
FIG. 13 is an assembled perspective view of the trough 1c.
FIG. 14 is a perspective view of a metal fitting 30.
FIG. 15 is a perspective view showing a state in which the metal fitting 30 is attached to the trough 1d.
FIG. 16 is a perspective view showing a state in which a trough lid 21a is fixed to the trough 1d with the metal fitting 30.

### DESCRIPTION OF SOME EMBODIMENTS

### (First Embodiment)

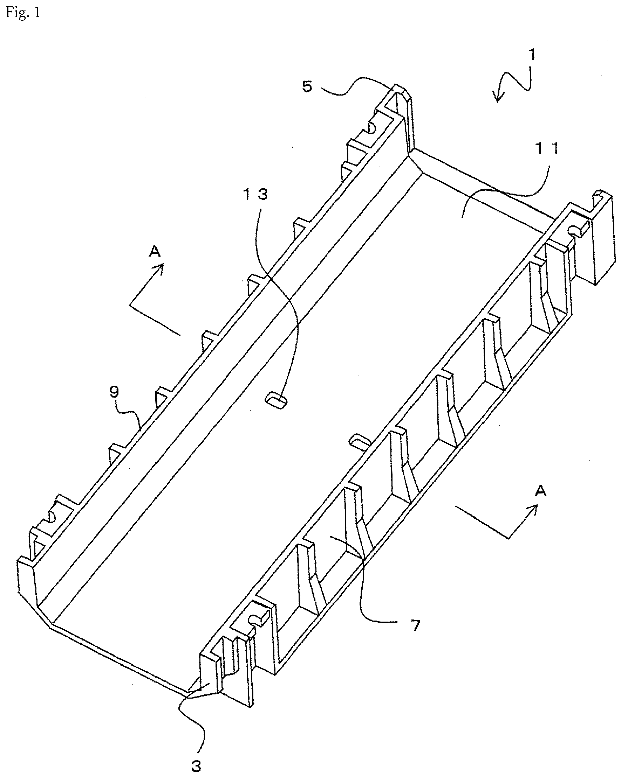

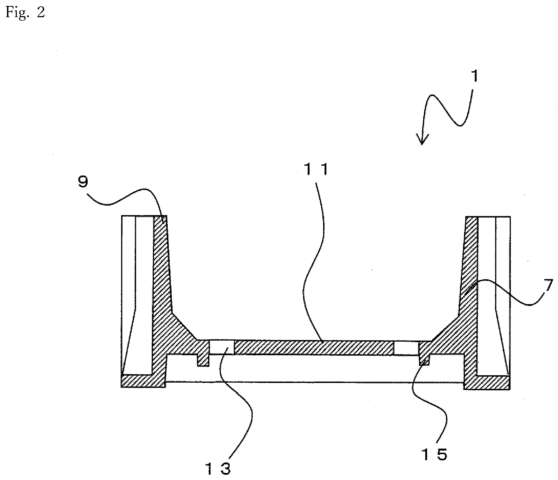

Hereinafter, embodiments of the present invention will be described with reference to the accompanying drawings. FIG. 1 is a perspective view showing a trough 1 and FIG. 2 is a cross-sectional view taken along A-A line in FIG. 1. In a cross section taken perpendicularly to an axial direction of the trough 1, the trough 1 is in a substantially letter-U shape formed by a bottom part 11 and side parts 9 erected on both ends of a width direction of the bottom part 11. The trough 1 is made of resin, for example, and formed by press molding or injection molding. The trough 1 is to be used with a trough lid, which will be described below, that covers the trough 1. The trough 1 has a length of approximately 1 m, for example.

The trough 1 includes a trough storage part 7, a male part 3 that is provided on one of end parts of an axial direction of the trough storage part 7, and a female part 5 that is provided on the other end part of the axial direction of the trough storage part 7. A plurality of the troughs 1 are disposed in a longitudinal direction, and, when interconnecting the adjacent troughs 1, the male part 3 is inserted from above into the female part 5 to be connected such that the male part 3 and the female part 5 can be fitted with each other. By fitting the male part 3 and the female part 5 of the adjacent troughs 1 with each other in this way, the troughs 1 can be interconnected. A fitting state between the male part 3 and the female part 5 will be described in detail below.

A plurality (at least a pair) of through-holes 13 are provided in the bottom part 11 of the trough 1 penetrating the bottom part 11 at predetermined positions that are symmetric to each other in a width direction of the trough 1. The through-holes 13 are formed in the trough storage part 7. Although only the pair of through-holes 13 are disposed at one position of the longitudinal direction in the illustrated example, the through-holes 13 may be formed at a plurality of positions with respect to the longitudinal direction. That is, the plurality (the pair) of through-holes 13 are formed in the bottom part 11 of the trough 1 at one or more positions in the longitudinal direction.

As shown in FIG. 2, in the trough storage part 7, a pair of protrusions 15 protruding downward are provided on a rear surface side of the bottom part 11. Each of the protrusions 15 is disposed for each of the through-holes 13 on an outer side of the width direction of the trough 1. That is, the protrusions 15 are disposed at positions symmetric in the width direction of the trough 1. An inner side face of the protrusion 15 and a side face (an inner face on the outer side of the width direction of the trough 1) of the through-hole 13 are formed of a substantially same continuous plane.

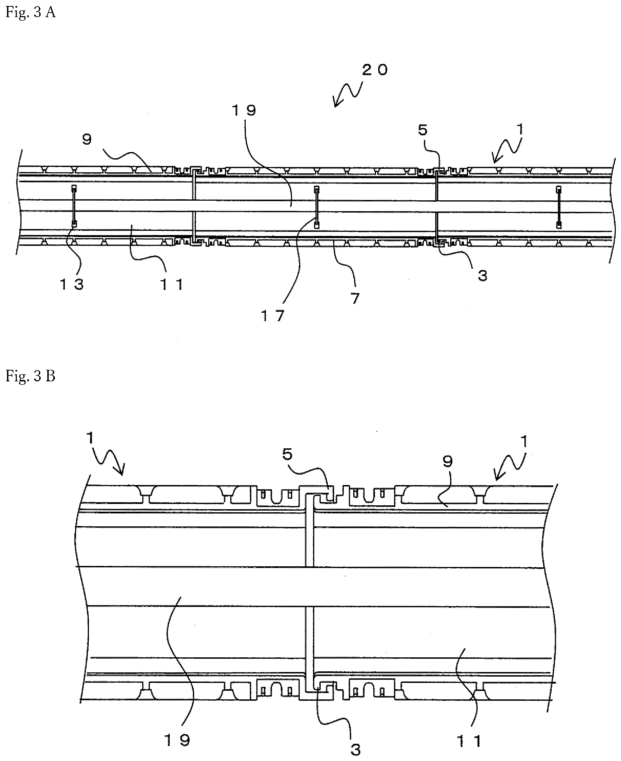

Next, a structure for fixing a cable to a trough structure will be described. A cable is fixed to a trough structure in which the plurality of troughs 1 are interconnected. FIG. 3A is a plan view showing a structure for fixing a cable in which a cable 19 is fixed to a trough structure 20, and FIG. 3B is an enlarged view of a fitting part between the troughs 1.

As mentioned above, the troughs 1 are interconnected by fitting the male part 3 with the female part 5. The female part 5 includes a concave groove on an inner face side of the width direction, and the male part 3 includes a convex part, which corresponds to the concave groove, on an outer face side of the width direction. The convex part of the male part 3 is inserted into the concave groove of the female part 5 from above so that both are fitted with each other and the adjacent troughs 1 can be interconnected. The trough structure 20 can be formed by interconnecting the plurality of troughs 1 in this way.

After forming the trough structure 20 by interconnecting the multiple troughs 1, the cable 19 is laid inside the troughs 1. The cable 19 is disposed between the pair of through-holes 13 that are disposed symmetrically on both sides of the width direction. A string-like member 17 is inserted through the through-holes 13. The string-like member 17 fixes the cable 19 mounted inside the trough 1 to the bottom part 11 of the trough storage part 7.

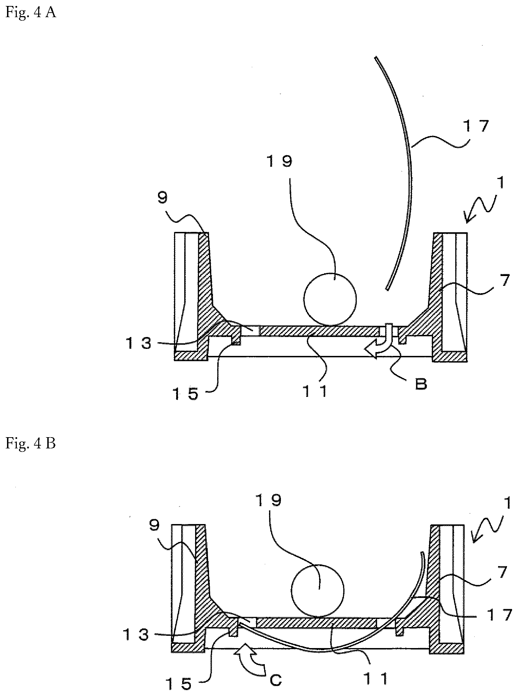

Next, a method for fixing the cable 19 to the trough structure 20 using the troughs 1 will be described in detail. Firstly, as shown in FIG. 4A, the cable 19 is laid in the troughs 1 (the trough structure). The cable 19 is disposed between the through-holes 13 that are disposed symmetrically on both sides of the width direction.

In this state, the string-like member 17 is inserted from above into one of the through-holes 13 (an arrow B in the drawing). That is, the string-like member 17 has a size smaller than that of the through-hole 13 and is made of hard resin or metal. The string-like member 17 is either a wire-shaped member having a circular cross section or a band-shaped member having a flat plane cross section. Although the cross-sectional shape of the string-like member 17 may be either of the circular shape or the band shape (sheet shape), the band-shaped cross section is more preferable. This is because a contacting area between the cable 19 and the string-like member 17 is larger with the band-shaped cross section when fixing the cable 19 to the trough 1 with the string-like member 17 and this increases friction force per predetermined binding force.

Also, the string-like member 17 is a band-shaped member having a curve that is curved toward a predetermined direction with a predetermined curvature when no external force is applied (before being inserted into the through-holes). For example, it is preferable that the string-like member 17 has rigidity to an extent that the string-like member remains still curly state and can be kept at a predetermined curvature when being removed from a state of being wound around a reel or the like. The string-like member 17 is inserted into one of the through-holes 13 preferably with the curve direction being directed toward the other through-hole 13.

Next, as shown in FIG. 4B, the string-like member 17 inserted through one of the through-holes 13 is passed under the trough 1 and then inserted into the other through-hole 13 from a lower part of the trough 1 (an arrow C in the drawing). Note that, when the trough 1 is installed on the ground, a lower part of the side part 9 extends down beyond the bottom part 11 and thus there is a space between a rear face side of the bottom part 11 of the trough 1 and the ground. Thus, the string-like member 17 is inserted through into the space between the trough 1 and the ground.

Here, as mentioned above, an opening size of the through-hole 13 is larger than a cross sectional area of the string-like member 17. For example, if the string-like member 17 is in the wire shape, the size of the through-hole 13 is preferably two to three times of a diameter of the string-like member 17. If the string-like member 17 is in a band shape with the flat plane cross section, preferably, a shorter diameter of the opening of the through-hole 13 is approximately between 1.2 and 2.0 times a horizontal width of the band-shaped member and a longer diameter of the through-hole 13 is preferably between three and four times the horizontal width of the band-shaped member. It is hard to insert the string-like member 17 into the through-hole 13 unless there is such enough room.

At this time, the string-like member 17 has the curve so that a tip end of the string-like member 17 can be directed upward. This makes it easier to insert the string-like member 17, which has been passed under the trough 1, into the through-hole 13 on the opposite side. Also, a protrusion 15 is formed on an outer side of the through-hole 13 with respect to the width direction of the trough 1. Thus, the tip end of the string-like member 17 comes into contact with the protrusion 15 and can be led to the through-hole 13. That is, the protrusion 15 functions as a stopper that prevents the string-like member 17 from reaching beyond the through-hole 13 as well as a guide that leads the string-like member 17 into the through-hole 13. This facilitates insertion of the string-like member 17 into the through-hole 13.

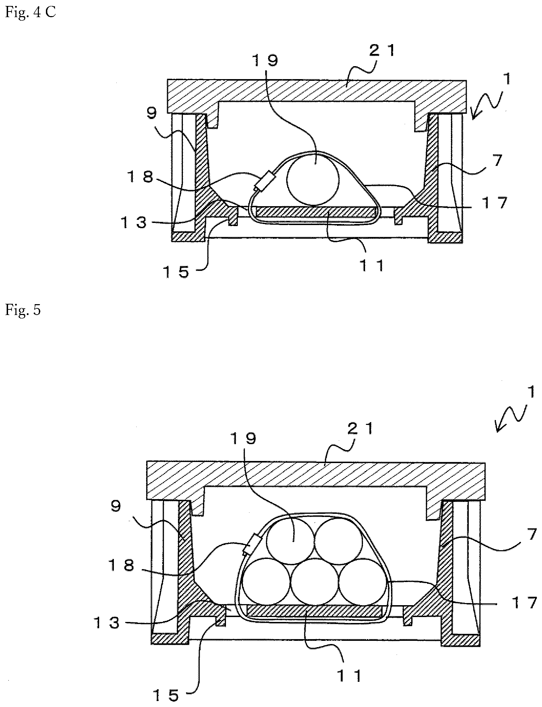

Next, as shown in FIG. 4C, the cable 19 is fixed inside the trough 1 by using the string-like member 17. That is, the string-like member 17 has a length to an extent that the string-like member 17 can pass under the trough 1 and fix the cable 19. The string-like member 17 may be fixed by overlapping the string-like member 17 with each other and by using a fixing member, such as a metal fitting, that fixes the overlapped part of the string-like member 17. Alternatively, the string-like member 17 may be fixed by using a fixing member 18, which is like a commercially available binding band having a fixing portion at one end of a predetermined length thereof. When fixing of the cable 19 is completed, a trough lid 21 is put over the trough 1 (the trough structure).

The trough lid 21 covers an upper part of the trough 1 and is fixed to the trough 1 with a fixing member, which is omitted in the drawing. The fixing member for the trough lid 21 is a fixing band made of metal, for example.

In this way, a structure for fixing the cable to the trough structure, in which the cable 19 is fixed to the trough structure 20, can be obtained. That is, in the structure for fixing the cable to the trough structure, the cable 19 mounted inside the trough 1 is fixed to the multiple troughs 1 inside the trough storage parts 7 with the string-like members 17 at predetermined intervals, and the trough lid 21 is put over the trough structure.

There may be one or more of the cables 19 that are to be laid in the trough structure 20. For example, as shown in FIG. 5, the plurality of cables 19 may be fixed together to the trough 1 with the string-like member 17. The number of the cables 19 accommodated inside the trough 1 is not particularly limited. At this time, the string-like member 17 is fixed by overlapping the string-like member 17 and by fixing the overlapped part with the fixing member 18, or, alternatively, the string-like member 17, having a predetermined length and a fixing portion at one end thereof, is fixed by using the fixing portion as the fixing member 18. Although the string-like member 17 can be fixed with each other by directly bending or tying in some cases in any of the embodiments, it is preferable that the string-like member 17 is fixed by using the fixing member 18.

Here, the through-holes 13 formed in the bottom part 11 of the trough 1 are preferably as far away from each other as possible in the width direction, on condition that insertion of the string-like member 17 into the through-hole 13 is not inhibited and strength of the trough 1 is not deteriorated. This is because sizes and the number of the cables 19 to be installed inside the trough 1 is not specified and, if there is a wide distance between the through-holes 13, the cables 19 can be fixed to the trough 1 as stably as possible, regardless of types and the number of the cables 19.

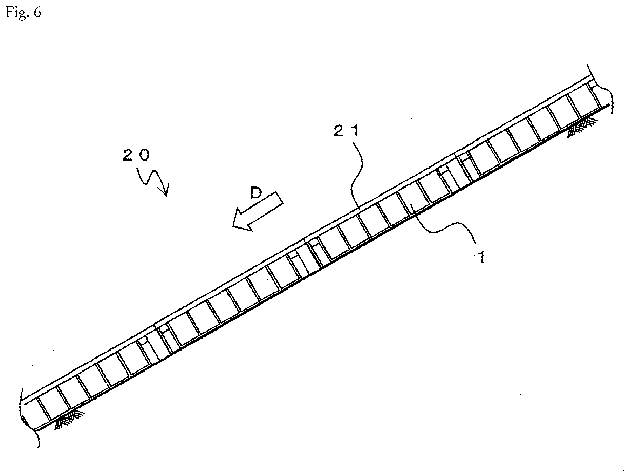

Also, as shown in FIG. 6, the trough structure 20 may be laid on a slope surface. In such the case, since the cable 19 is fixed to the trough 1 with the string-like member 17, a dead weight of the cable 19 can be supported in a direction parallel to the bottom part 11 of the trough 1 (a direction of an arrow D in the drawing).

As described above, according to the first embodiment, the through-holes 13 are formed in the bottom part 11 of the trough 1 such that the string-like member 17 can be inserted through the through-holes 13 to be attached to the trough 1. Thus, the cable 19 inside the trough 1 can be fixed by using the string-like member 17. As a result, even if the trough structure 20 is installed on a slope, for example, the dead weight of the cable 19 toward a lower side of the slope can be stably supported. This prevents the cable 19 inside the trough 1 from being moved or bent even when external force due to an earthquake etc. is applied to the cable 19 laid inside the trough structure 20.

Also, the protrusion 15 is provided on the outer side of each of the through-holes 13 on a lower surface of the bottom part 11 of the trough 1. This prevents the tip end of the string-like member 17 from reaching beyond the through-hole 13 when the string-like member 17 is inserted into the through-hole 13, and the protrusion 15 can guide the string-like member 17 into the through-hole 13. Thus, insertion of the string-like member 17 into the through-hole 13 at the lower part of the bottom part 11 of the trough 1 is easy. Thus, the string-like member 17 can be easily inserted into the through-hole 13 at the lower part of the trough 1 even from an upper part of the trough 1.

Also, the string-like member 17 has a curve from the start, and thus, when the string-like member 17 is inserted through one of the through-holes 13, the tip end of the string-like member 17 can be directed to the other through-hole 13 at the lower part of the trough 1. This can eliminate a work of reaching a hand under the trough bottom part to support the string-like member 17, facilitating the insertion of the string-like member 17.

Also, the size of the through-hole 13 is formed to be larger than that of the string-like member 17, and thus the through-hole 13 can function as a drain hole for draining rain water from an interior of the trough 1.

### (Second Embodiment)

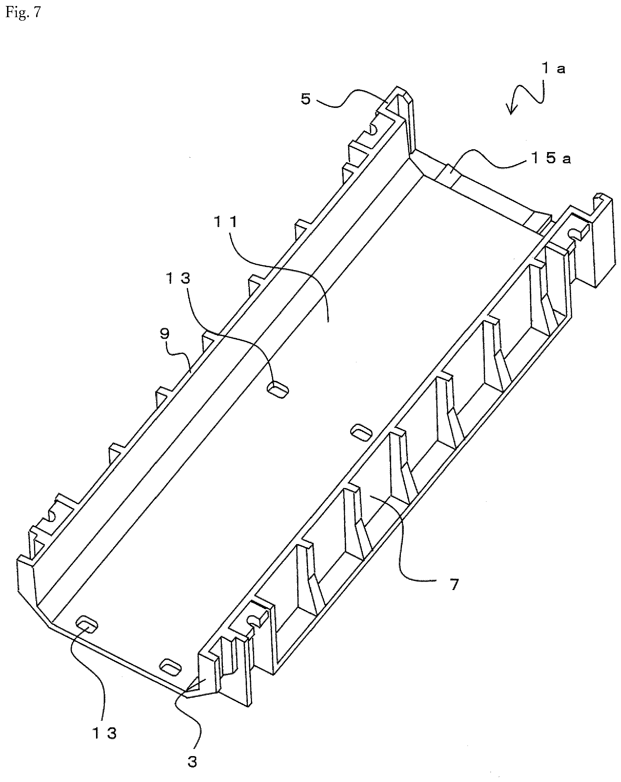

Next, a second embodiment of the present invention will be described. FIG. 7 is a perspective view showing a trough 1a according to the second embodiment. In the descriptions below, structures having the same function as in the first embodiment will have the same notations and redundant descriptions will be omitted.

The trough 1a has approximately the same structure as the trough 1 except for a position arrangement etc. of the through-holes 13. In the trough 1a, the through-holes 13 are formed in the bottom part 11 of the male part 3. That is, at least as the pair of the through-holes 13, the through-holes 13 are formed in the bottom part 11 of the male part 3 at predetermined positions that are symmetrical in the width direction of the trough 1. Also, a protrusion 15a is provided on a top surface of the bottom part 11 of the female part 5. The through-holes 13, other than the through-holes 13 formed in the bottom part 11 of the male part 3, may also be formed at least in the trough storage part 7.

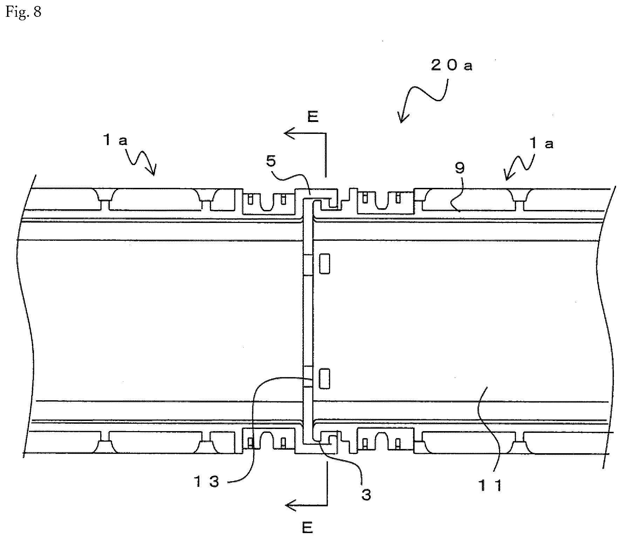

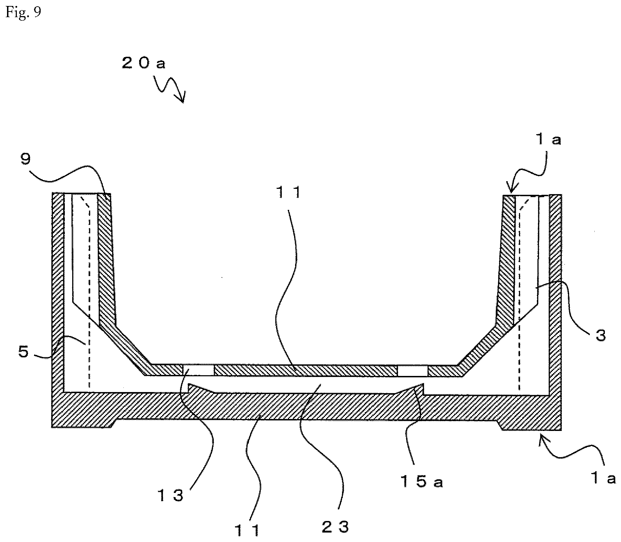

FIG. 8 is a plan view showing a trough structure 20a in which the troughs 1a are interconnected, and FIG. 9 is a cross-sectional view taken along E-E line in FIG. 8. As mentioned above, the male part 3 is inserted from above into the female part 5 so as to be fitted with each other, thereby interconnecting the troughs 1. Here, as shown in FIG. 9, in the trough structure 20a in which the troughs 1a are interconnected by fitting the male part 3 and the female part 5, a space 23 is formed between a rear surface of the bottom part 11 of the male part 3 and the top surface of the bottom part 11 of the female part 5.

Also, the protrusion 15a formed on the top surface of the bottom part 11 of the female part 5 is disposed at a position corresponding to the through-hole 13 at the male part 3 (under the through-hole 13). At this time, the protrusion 15a has a slope surface such that an amount of protrusion thereof gradually increases outwardly from a center side of the width direction of the trough 1a. A position of an end part of the protrusion 15a (a side at which the amount of protrusion is maximum) does not go beyond an end part of the through-hole 13 (the end part on the outer side of the width direction of the trough 1a).

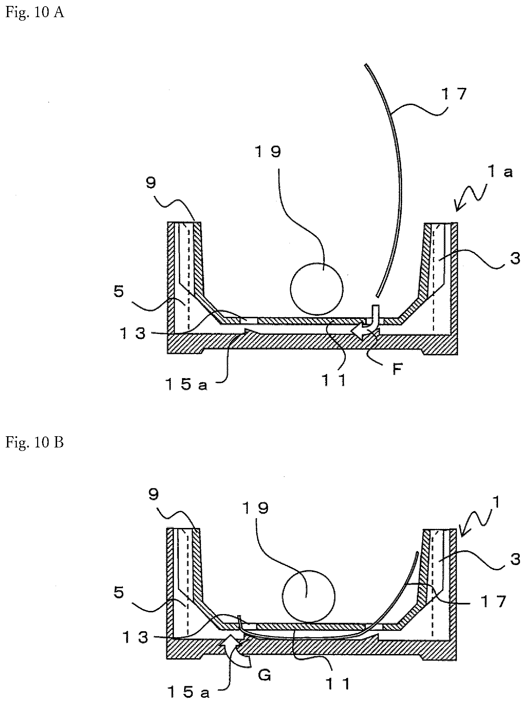

Next, a method for fixing the cable 19 to the trough 1a (the trough structure 20a) will be described. Firstly, as shown in FIG. 10A, the cable 19 is laid in the trough 1a (the trough structure 20a). The cable 19 is disposed between the through-holes 13 that are disposed symmetrically in the width direction. In such the state, the string-like member 17 is inserted from an upper surface side of the bottom part 11 of the male part 3 into one of at least the pair of the through-holes 13 that is on one side of the trough width direction (an arrow F in the drawing).

Next, as shown in FIG. 10B, the string-like member 17 that is inserted through one of the through-holes 13 is passed under the trough 1 and inserted into the other through-hole 13 from the lower part of the trough 1 (an arrow G in the drawing). At this time, the string-like member 17 is inserted into the space 23 between the rear surface of the bottom part 11 of the male part 3 and the top surface of he bottom part 11 of the female part 5 and guided by the protrusion 15a so as to be taken out from the through-hole 13 on the other side of the width direction to the upper surface side of the bottom part 11 of the male part 3.

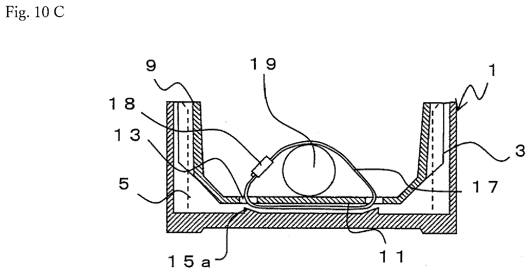

Next, as shown in FIG. 10C, the cable 19 mounted inside the trough 1a is fixed to the bottom part 11 of the male part 3 by using the string-like member 17. After fixing of the cable 19 is completed, the trough lid 21 of which illustration is omitted is put over the trough 1a (the trough structure 20a). This can provide the structure for fixing the cable to the trough structure in which the cable 19 mounted inside the trough 1a is fixed to the multiple troughs 1 at the fitting parts of the troughs 1a with the string-like members 17 at predetermined intervals, with the trough lid 21 being put over the trough structure.

That is, the string-like member 17 ties together and covers the through-hole 13 on the one side of the width direction of the trough 1, the space created by the space 23 between the rear face side of the bottom part 11 of the male part 3 and the top surface of the bottom part 11 of the female part 5, the through-hole 13 on the other side of the width direction of the trough 1, and the upper surface of the cable 19 mounted on the upper surface of the bottom part 11 of the male part 3 so as to be fixed in a loop shape, thereby fixing the cable 19 mounted inside the trough 1 to the bottom parts 11 of the male parts 3 of the multiple troughs 1 at the predetermined intervals.

At this time, the fixing member 18 fixes the overlapped part or one end part of the string-like member 17. As shown in FIG. 7, similarly to FIG. 1, in addition to the through-holes 13 at the male part, the pair of the through-holes may be formed at the center of the trough longitudinal direction of the trough storage part 7 symmetrically in the trough width direction.

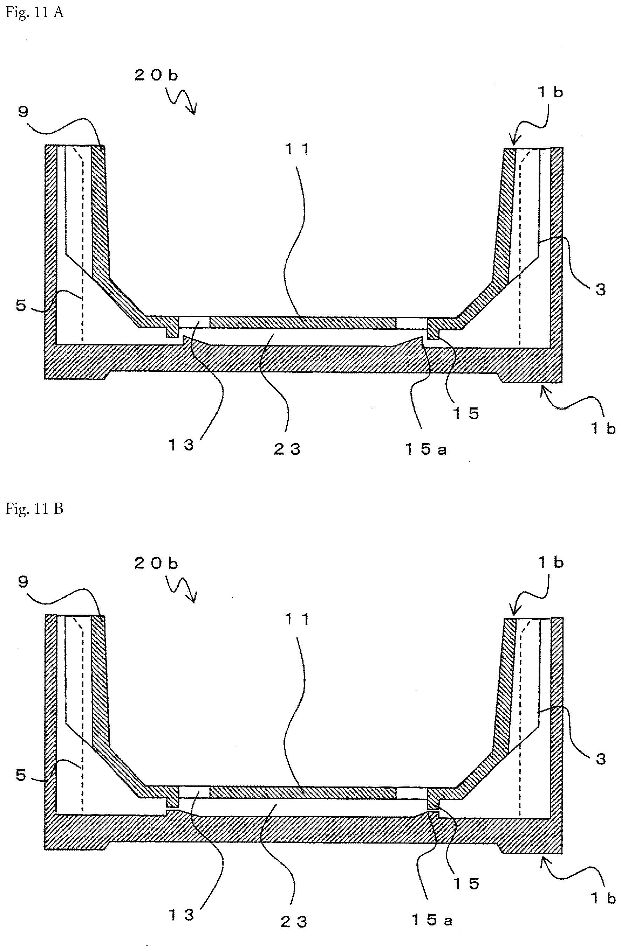

In the example shown in FIG. 9, the protrusions 15a are formed on the top surface of the bottom part 11 of the female part 5. However, the protrusions may be formed at other positions. FIG. 11A and FIG. 11B are cross-sectional views of a trough structure 20b in which troughs 1b are interconnected with each other. The trough 1b is provided with, in addition to the protrusions 15a that are provided on the top surface of the bottom part 11 of the female part 5, the above-mentioned protrusions 15 are formed on the rear surface of the bottom part 11 of the male part 3. The shape and formation length of the protrusion 15a are different between FIG. 11A and FIG. 11B.

As above, the above-mentioned protrusions 15 may be provided not only on the top surface of the bottom part 11 of the female 5 but also on the rear surface of the bottom part 11 of the male part 3. That is, the protrusion 15a protruding from the top surface of the bottom part 11 of the female part 5 and the protrusion 15 protruding from the rear surface of the bottom part 11 of the male part 3 may be provided at positions that correspond with each other in a proximity of an outer edge on an outer side of the width direction of the through-hole 13 such that the protrusions do not interfere with each other when the male part 3 is fitted with the female part 5. At this time, the protrusion 15a, which is provided on the top surface of the bottom part 11 of the female part 5, may be provided so as to include a part at which the amount of protrusion thereof gradually increases outwardly from the center side of the width direction on the top surface of the female part 5, facing the through-hole 13, within a range between the position corresponding to the rear surface of the through-hole 13 and the outer edge on the outer side of the rear surface of the through-hole 13.

Also, in place of the protrusions 15a, only the protrusions 15 may be provided. That is, as shown in FIG. 11A, the protrusion 15 or the protrusion 15a protruding from the top surface of the bottom part of the female part 5 or from the rear surface of the bottom part of the male part 3 may be provided at the position that corresponds to the through-hole 13 on the top surface of the bottom part 11 of the female part 5 or at the position that corresponds to the proximity of the outer edge on the outer side of the width direction of the through-hole 13 in the rear surface of the bottom part 11 of the male part 3. Alternatively, as shown in FIG. 11B, the protrusion 15 or the protrusion 15a protruding from the top surface of the bottom part of the female part 5 or from the rear surface of the bottom part of the male part 3 may be provided at the position within a range between the position corresponding to the rear surface of the through-hole 13 in the top surface of the bottom part 11 of the female part 5 and the outer edge on the outer side of the rear surface of the through-hole 13, or at the position in the proximity of the outer edge on the outer side of the width direction of the through-hole 13 on the rear surface of the bottom part 11 of the male part 3 such that the protrusions do not interfere with each other when the male part 3 is fitted with the female part 5 to interconnect the troughs.

According to the second embodiment, the same effects as in the first embodiment can be obtained. Also, the through-holes 13 are disposed at the fitting part of the troughs where the male part 3 and the female part 5 overlap with each other, and thus the female part 5 can cover the lower part of the through-holes 13. This can prevent the through-holes 13 from being exposed externally and prevent intrusion of water or the like from the exterior of the troughs.

Also, by forming the protrusion 15a that includes the part at which the amount of protrusion gradually increases outwardly from the center side on the top surface side of the bottom part 11 of the female part 5, when the string-like member 17 is inserted into one of the through-holes 13 from the upper part of the male part 3, the string-like member 17 is led to the other through-hole 13 on the lower part of the male part 3, and this facilitates insertion of the string-like member 17 into the through-hole 13. Also, further forming the protrusion 15 on the lower surface side of the male part 3 can prevent the string-like member 17 from being inserted beyond the position of the through-hole 13.

As above, the protrusion 15a is formed on the top surface of the bottom part 11 of the female part 5 so as to include the part at which the amount of protrusion thereof gradually increases outwardly from the center side of the width direction within the range between the position corresponding to the rear surface of the through-hole 13 of the male part 3 and the outer edge on the outer side of the rear surface of the through-hole 13, or the protrusion 15 protruding from the rear surface of the bottom part 11 is formed at the position corresponding to the proximity of the outer edge on the outer side of the through-hole 13 in the rear surface of the bottom part 11 of the male part 3. Thus, providing at least either of the protrusions at positions within the range between the position corresponding to the rear surface of the through-hole 13 of the male part 3 and the outer edge on the outer side of the rear surface of the through-hole 13 so as not to interfere with each other can facilitate insertion of the string-like member 17 into the through-hole 13.

### (Third Embodiment)

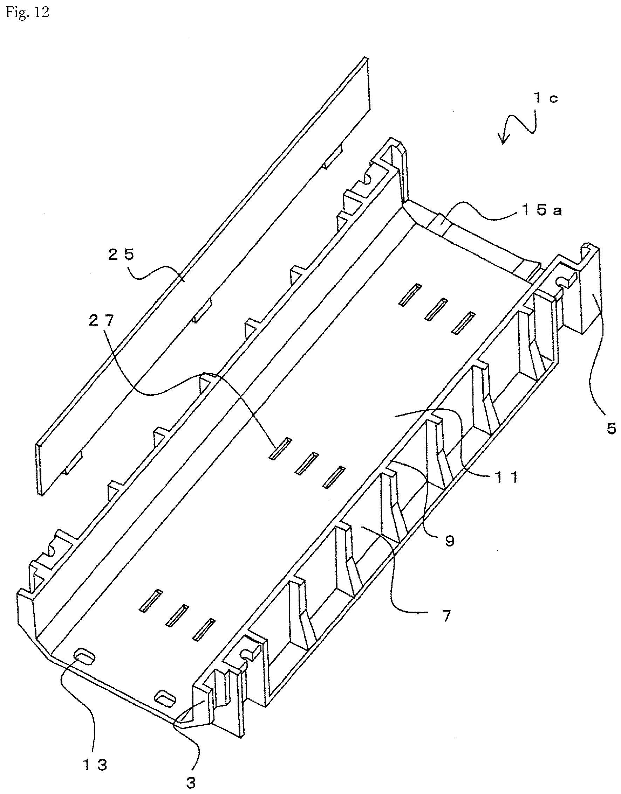

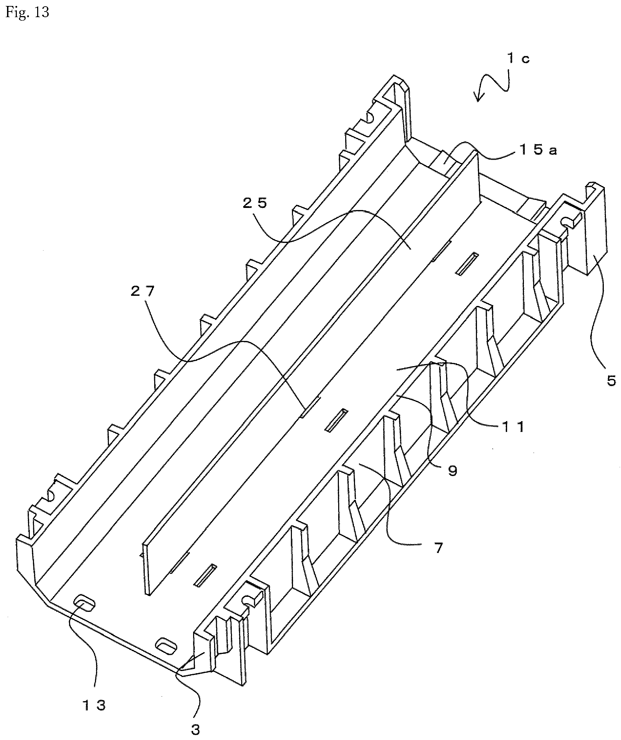

Next, a third embodiment of the present invention will be described. FIG. 12 is an exploded perspective view of a trough 1c, and FIG. 13 is an assembled perspective view of the trough 1c. The trough 1c has approximately the same structure as the trough 1a except that the trough 1c includes a separator 25.

On the bottom part 11 of the trough storage part 7, a plurality of lines of grooves 27 that are parallel to the longitudinal direction of the trough are formed at predetermined intervals. In the illustrated example, the grooves 27 are formed at three positions in the longitudinal direction and in three lines in the width direction. The grooves 27 may be formed in one line at the center of the width direction, for example, instead of being formed in the plurality of lines.

The separator 25 is a plate-like member having an approximately the same length as the trough storage part 7 and has protrusions formed on a lower end thereof at predetermined intervals corresponding to those of the grooves 27. As shown in FIG. 13, the protrusions on the lower side of the separator 25 are inserted into the grooves 27 such that the separator 25 can stand and mounted on the grooves 27.

With the separator 25 standing in this way, an inner space of the trough 1c can be divided into a plurality of parts in the width direction. Thus, when laying the plurality of cables 19 inside the trough 1c, the cables 19 can be separated into sections depending on types etc. of the cables. Note that, by selecting the grooves 27 for fixing the separator 25 appropriately, a standing position of the separator 25 can be changed. Also, if necessary, the plurality of separators 25 may be used and the trough storage part 7 can be sectioned into three or more parts in the width direction.

According to the third embodiment, the same effects as in the first embodiment can be obtained. Also, with the separator 25, the interior of the trough storage part 7 can be sectioned into the plurality of parts. At this time, if the through-holes 13 are formed on the male part 3 and the grooves 27 are disposed in the trough storage part 7, the separator 25 are not to be disposed on positions of the through-holes 13. Thus, the separator 25 does not obstruct fixing of the cables 19.

### (Fourth Embodiment)

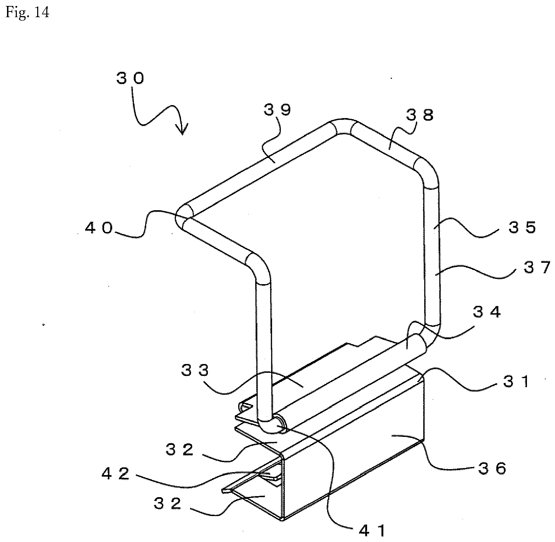

Next, a fourth embodiment of the present invention will be described. FIG. 14 is a perspective view of a metal fitting 30 that is used in the fourth embodiment. The metal fitting 30 includes a metal-fitting fixing part 31 and a buckle 40 that is attached to the metal-fitting fixing part 31.

The metal-fitting fixing part 31 is formed of a plate-shaped metal member having a predetermined width. The metal-fitting fixing part 31 includes a pair of bent parts 32, a linking part 36, and a folded part 33. The bent parts 32 that are substantially parallel to each other are provided on both upper and lower sides of the linking part 36, thereby forming an approximately letter-U shape. At a tip end of the upper bent part 32, the folded part 33 is provided such that the folded part 33 is substantially parallel to the upper bent part 32 and, at the same time, is folded back toward the linking part 36. That is, in a side view, the letter-U shape, which is formed by the linking part 36 and the upper and lower bent parts 32, and the folded part 33 together form a substantially letter-S shape.

On an inner surface side of the lower bent part 32 of the metal-fitting fixing part 31, a plurality of locking hooks 42 facing toward an inside of the bent parts 32 (a side of the linking part 36) and standing inward at a sharp angle are formed. The plurality of the locking hooks 42 are formed at positions that are predetermined distance away from each other in a width direction of the lower bent part 32. When the metal fitting 30 is fixed to the trough, the locking hooks 42 can dig into mounting parts so that the metal fitting 30 can be fixed strongly to the trough.

A buckle-fixing part 34 for fixing the buckle 40 is provided at a tip end of the folded part 33. The buckle-fixing part 34 is formed by bending the tip end part of the folded part 33 into a loop shape so that the buckle 40 can be rotatably supported.

The buckle 40 is formed of a rod-shaped metal member. Buckle tip-end parts 41 of the buckle (tip end parts of long sides 36 of an L-shaped part 35 on both sides of the buckle 40) are inserted into the buckle-fixing part 34 and fixed. The buckle 40, excluding the buckle tip-end parts 41, includes a couple of the L-shaped parts 35 that are substantially parallel to each other and bent in a substantially letter-L shape in a side view. At this time, for each of the L-shaped parts 35, a side on the buckle tip-end part 41 is the long side 37 and a part that is bent at a substantially right angle at a tip end of the long side 37 (on a side opposite to the buckle tip-end part 41) is a short side 38. The tip ends of the short sides 38 of the couple of L-shaped parts 35 that are parallel to each other are bent at right angles mutually so as to face each other and to form a connecting part 39, which connects the both tip ends of the short sides 38. That is, the pair of the short sides 38 and the connecting part 39 are formed into a substantially letter-U shape as a unified body.

Tip end parts (buckle tip-end parts 41) of the long sides 37 of the L-shaped parts 35 are bent at right angles for a predetermined length so as to face each other, being parallel to a bending direction of the connecting part 39. A predetermined length of the buckle tip-end parts 41 that are bent at right angles are inserted into the buckle-fixing part 34 of the metal-fitting fixing part 31 and the buckle 40 is rotably supported inside the buckle-fixing part 34. For the metal fitting 30, it is preferable to use a rod material or a plate material made of stainless steel or the like having a predetermined thickness, or a steel rod or a stainless-steel plate that is surface-treated for rust proof.

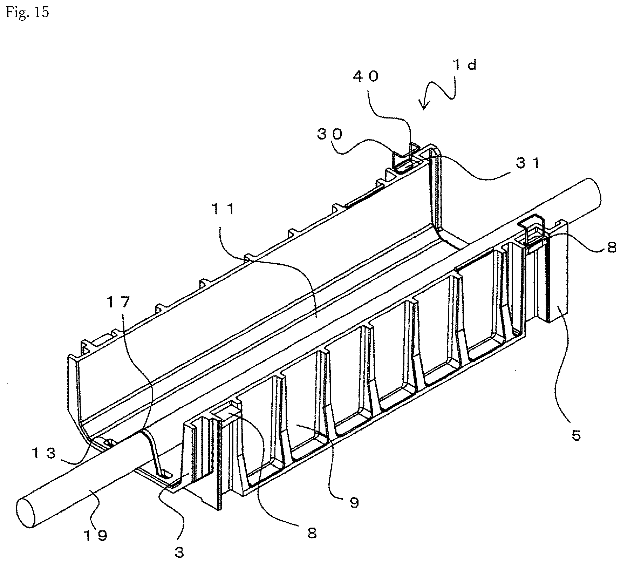

Next, in regard to the structure for fixing the cable to the trough structure, a structure for fixing a trough lid to the trough structure using the metal fitting 30 will be described. FIG. 15 is a view showing a trough 1d to which the metal fitting 30 is mounted. At each of predetermined front and back positions of an axial direction of the trough 1d, a metal-fitting mounting part 8, having a predetermined thickness and a predetermined length, for mounting the metal-fitting fixing part 31 of the metal fitting 30 is provided. The metal-fitting mounting part 8 is disposed on an outer side of each of the side parts 9 at an upper part of the trough 1d. Here, in FIG. 15, the cable 19 can be fixed by using the string-like member 17 to the through-holes 13 provided in the bottom part 11 of the trough. However, the fixing of the cable 19 to the trough 1d is similar to that in the first and second embodiments and its description will be omitted.

The metal-fitting mounting part 8 of the trough 1d is placed between the pair of bent parts 32, which are substantially parallel to each other and formed in the metal-fitting fixing part 31 of the metal fitting 30, so that the metal fitting 30 is mounted onto the trough 1d. At this time, as mentioned above, the locking hook 42 standing inward at the sharp angle is formed at the lower bent part 32 of the metal-fitting fixing part 31. When the metal-fitting fixing part 31 is mounted onto the metal-fitting mounting part 8 of the trough, the locking hook 42 digs into a mounting surface of the metal-fitting mounting part 8, thereby firmly fixing the metal fitting 30 to the metal-fitting mounting part 8.

The metal fitting 30 may be fixed at least to the metal-fitting mounting parts 8 on either at front or back of the trough 1d. Also, in such the state, the buckle 40 attached to the metal-fitting fixing part 31 is freely rotatable and may hang over outwardly from the trough 1d.

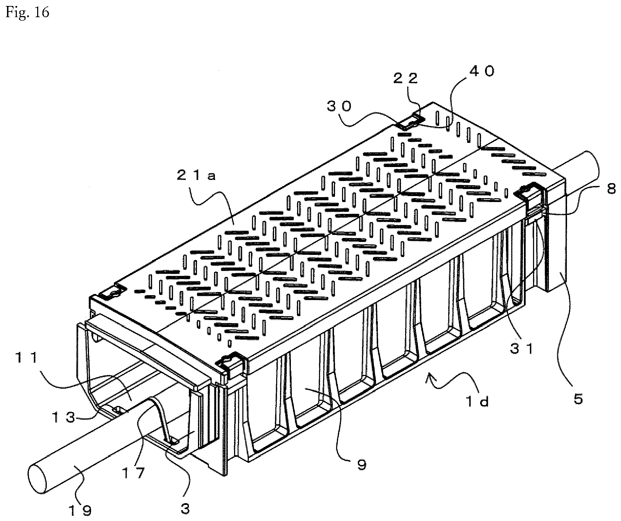

FIG. 16 is a perspective view showing a state in which a trough lid 21a is fixed to the trough 1d by the metal fitting 30. On both sides of a top surface of the trough lid 21a, buckle-fixing grooves 22 are formed at positions corresponding, in an axial direction of the trough 1d, to the metal-fitting mounting parts 8. That is, the buckle-fixing grooves 22 are formed on both sides of the width direction and at the front and back of the longitudinal direction of the trough lid 21a. The buckle-fixing groove 22 is a groove having a shape that corresponds to a shape of the buckle 40 (the short sides 38 and the connecting part 39). The fixing of the cable 19 using the string-like member 17 to the through-holes 13 provided in the bottom part 11 of the trough 1d illustrated in FIG. 16 is similar to that in the first and second embodiments and its description will be omitted similarly as in FIG. 15.

As mentioned above, the buckle-fixing part 34 is provided at the tip end part of the folded part 33 on the upper part of the metal fitting 30 so as to support the buckle 40 rotatably. For this reason, when mounting the trough lid 21a, the buckle 40 can be pulled down outwardly and kept off. After disposing the trough lid 21a over the trough 1d, the short sides 38 and the connecting part 39 at the tip end of the buckle 40 are rotated toward an upper part of the trough lid 21a to fix the trough lid 21 to the trough 1d by using the metal fitting 30.

At this time, the buckle 40 is lifted up slightly, resisting spring force of the bent portion 33 of the metal-fitting fixing part 31, and the short sides 38 of the buckle 40 are then moved over the trough lid 21a. When the short sides 38 and the connecting part 39 of the buckle 40 are moved over to the buckle-fixing groove 22 provided on the trough lid 21a, the short sides 38 and the connecting part 39 are fitted into the buckle-fixing groove 22. In this way, the trough lid 21a that is put over the trough 1d can be fixed to the trough 1d.

At this time, even if a force trying to remove the trough lid 21a from the trough 1d is applied, the short sides 38 and the connecting part 39 of the buckle 40 are fixed into a groove face of the buckle-fixing groove 22 due to the spring force, and the spring force further keeps the buckle 40 to be in contact with the buckle-fixing groove 22. Thus, the buckle 40 is not removed from the buckle-fixing groove 22 that is formed in the trough lid 21a.

As described above, the metal fitting 30 for fixing the trough lid 21a of the present invention, which includes the metal-fitting fixing part 31 and the buckle 40, utilizes the spring force of plate-like metal members to prevent the buckle 40 from being removed. Thus, it is possible to fix the trough lid 21a to the trough 1d easily in a simple structure, in which no bolts or nuts are used and no tools are required, thereby facilitating the installation.

Although the embodiments of the present invention have been described referring to the attached drawings, the technical scope of the present invention is not limited to the embodiments described above. It is obvious that persons skilled in the art can think out various examples of changes or modifications within the scope of the technical idea disclosed in the claims, and it will be understood that they naturally belong to the technical scope of the present invention.

For example, as mentioned above, the through-holes 13 may be formed on both the bottom part 11 of the male part 3 and the bottom part 11 of the trough storage part 7.

### DESCRIPTION OF NOTATIONS

1, 1a, 1b, 1c, 1d .......... trough
3 .......... male part
5 .......... female part
7 .......... trough storage part
8 .......... metal-fitting mounting part
9 .......... side part
11 .......... bottom part
13 .......... through-hole
15, 15a .......... protrusion
17 .......... string-like member
18 .......... fixing member
19 .......... cable
20, 20a, 20b .......... trough structure
21, 21a .......... trough lid
22 .......... buckle-fixing groove
23 .......... space
25 .......... separator
27 .......... groove
30 .......... metal fitting
31 .......... metal-fitting fixing part
32 .......... bent part
33 .......... folded part
34 .......... buckle-fixing part
35 .......... L-shaped part
36 .......... linking part
37 .......... long side
38 .......... short side
39 .......... connecting part
40 .......... buckle
41 .......... buckle tip-end part
42 .......... locking hook

## Claims

1. A trough comprising:
a trough storage part;
a male part that is provided on a first axial end of the trough storage part; and
a female part that is provided on a second axial end of the trough storage part, wherein
the trough includes side parts on both sides and a bottom part, forming a substantially letter-U shape in a cross section taken perpendicularly to an axial direction of the trough;
when interconnecting the adjacent troughs, the male part is inserted down into the female part such that the male part and the female part can be fitted with each other; and
a plurality of through-holes penetrating the bottom part of the trough are formed in the bottom part of the trough at least at one position in a longitudinal direction of the trough, being symmetrical in a width direction of the trough.

2. The trough according to claim 1, wherein
the through-holes are formed at least as a pair of through-holes in the bottom part of the male part.

3. The trough according to claim 2, wherein
when interconnecting the troughs by fitting the male part with the female part, a protrusion protruding from a top surface of the bottom part of the female part or from a rear surface of the bottom part of the male part is formed at a corresponding position on the top surface of the bottom part of the female part or on the rear surface of the bottom part of the male part, the position being corresponding mutually to a proximity of an outer edge on an outer side of a width direction of the through-hole.

4. The trough according to claim 2, wherein
when interconnecting the troughs by fitting the male part with the female part, a protrusion protruding from a top surface of the bottom part of the female part and a protrusion protruding from a rear surface of the bottom part of the male part are formed at positions on the top surface of the bottom part of the female part and on the rear surface of the bottom part of the male part, each of the positions being corresponding mutually to a proximity of an outer edge on an outer side of a width direction of the through-hole, such that the protrusions do not interfere with each other.

5. The trough according to claim 3 or 4, wherein
the protrusion provided on the top surface of the bottom part of the female part is provided so as to include a part at which an amount of protrusion of the protrusion gradually increases outwardly from a center side of a width direction on the top surface of the female part, facing the through-hole, within a range between a position corresponding to the rear surface of the through-hole and the outer edge on the outer side of the rear surface of the through-hole.

6. The trough according to any one of claims 2 to 5, wherein
through-holes other than the through-holes are formed at least in the trough storage part.

7. The trough according to any one of claims 1 to 5, wherein
grooves that are parallel to the longitudinal direction of the trough are formed on the bottom part of the trough storage part at predetermined intervals in one or more lines, and a separator stands on the grooves.

8. A method for fixing a cable to a trough structure using the troughs according to any one of claims 2 to 5, the method comprising:
forming a space between the rear surface of the bottom part of the male part and the top surface of the bottom part of the female part in the trough structure in which the troughs are interconnected by fitting the male part and the female part;
inserting the string-like member from an upper surface side of the bottom part of the male part into one of at least the pair of the through-holes that is on a first side of the trough width direction and taking out the string-like member from the through-hole on a second side of the width direction via the space between the rear surface of the bottom part of the male part and the top surface of the bottom part of the female part to the upper surface side of the bottom part of the male part; and
fixing the cable mounted inside the trough to the bottom part of the male part by using the string-like member.

9. The method for fixing the cable to the trough structure according to claim 8, wherein
the string-like member is a band-like member being curved in a predetermined direction with a predetermined curvature.

10. A structure for fixing a cable to a trough structure in which the cable is fixed to the trough structure that is formed by interconnecting a plurality of troughs, wherein
each of the plurality of troughs includes a trough storage part, a male part that is provided on a first axial end of the trough storage part, and a female part that is provided on a second axial end of the trough storage part;
when interconnecting the adjacent troughs, the male part is inserted down into the female part such that the male part and the female part can be fitted with each other;
each of the troughs has side parts on both sides and a bottom part, forming a substantially letter-U shape in a cross section taken perpendicularly to an axial direction of the troughs;
at least a pair of through-holes are formed in the bottom part of the male part at a predetermined position, being symmetrical in a width direction of the troughs;
at least either of a protrusion that is formed on a top surface of a bottom part of the female part so as to include a part at which an amount of protrusion thereof gradually increases outwardly from a center side of a width direction within a range between a position corresponding to a rear surface of the through-hole of the male part and an outer edge on an outer side of the rear surface of the through-hole, and a protrusion that protrudes from the rear surface of the bottom part and is formed at a position corresponding mutually to the proximity of the outer edge on the outer side of the through-hole in the rear surface of the bottom part of the male part is provided such that the protrusions do not interfere with each other;
the trough structure includes the troughs that are interconnected by fitting the male part with the female part, and the trough structure has a space created between the rear surface of the bottom part of the male part and the top surface of the bottom part of the female part;
a string-like member ties and covers the through-hole on a first side of the width direction of the troughs, a space created by the space between the rear face of the bottom part of the male part and the top surface of the bottom part of the female part, the through-hole on a second side of the width direction of the troughs, and an upper surface of the cable mounted on an upper surface of the bottom part of the male part so as to be fixed in a loop shape, thereby fixing the cable mounted inside the troughs to the bottom parts of the male parts of the multiple troughs at predetermined intervals.

11. The structure for fixing the cable to the trough structure according to claim 10, wherein
the trough structure is laid on a slope surface, and, with the cable being fixed to the troughs by the string-like member, a dead weight of the cable is supported in a direction parallel to the bottom parts of the troughs.

12. The structure for fixing the cable to the trough structure according to claim 11, wherein
the trough structure includes the multiple troughs being interconnected with each other, the cable mounted inside the troughs is fixed to the multiple troughs at a fitting part of the troughs by using the string-like member, and a trough lid is put over the trough structure.

13. A structure for fixing a trough lid to the trough structure, which includes the structure for fixing the cable to the trough structure according to claim 12, wherein
a metal fitting for fixing the trough lid includes a metal-fitting fixing part and a buckle;
each of predetermined front and back positions of the trough has a metal-fitting mounting part for mounting the metal fitting;
the metal-fitting mounting part is formed on an outer side of each of the side parts at an upper part of the trough with a predetermined thickness and a predetermined length and the metal-fitting fixing part of the metal fitting is mounted onto the metal-fitting mounting part;
the trough lid includes a buckle-fixing groove formed on a top surface of the trough lid on each side of a position corresponding, in an axial direction of the trough, to the metal-fitting mounting part; and
the buckle of the metal fitting is fixed into the buckle-fixing groove such that the trough lid put over the trough is fixed to the trough.

14. The structure for fixing the trough lid to the trough structure according to claim 13, wherein
the metal-fitting fixing part is formed of a plate-shaped metal member having a predetermined width;
the metal-fitting fixing part includes bent parts that are substantially parallel to each other and are provided on both upper and lower sides of a linking part, thereby forming substantially a letter-U shape, and a folded part is further provided at a tip end of the upper bent part such that the folded part is substantially parallel to the upper bent part and is folded back toward the linking part;
the metal-fitting fixing part is formed substantially in a letter-S shape with the letter-U shape and the folded part;
the metal-fitting fixing part is provided with a buckle-fixing part for fixing the buckle, which is formed by bending a tip end part of the folded part into a loop shape;
the buckle has an L-shaped part formed of long sides and short sides that are bent at substantially right angles at end parts of the long sides, tip ends of the short sides of the couple of L-shaped parts that are parallel to each other are bent at right angles respectively so as to be connected at a connecting part, and the short sides and the connecting part are formed into a substantially letter-U shape as a unified body;
each of tip end parts of the long sides of the L-shaped parts is bent at right angles for a predetermined length so as to face each other, being parallel to the connecting part, and predetermined lengths of the tip end parts of long sides of the L-shaped parts on both sides of the buckle are inserted into the buckle-fixing part such that the buckle is rotably supported by the buckle-fixing part;
the metal-fitting mounting part of the trough is placed between the pair of bent parts, which are substantially parallel to each other and formed in the metal-fitting fixing part of the metal fitting, so that the metal fitting is mounted onto the trough; and
when the trough lid is to be fixed to the trough by using the metal fitting, the buckle is rotated and the short sides and the connecting part are fitted into the buckle-fixing groove provided in the trough lid so that the trough lid is fixed to the trough.

15. A metal fitting for fixing a trough lid to a trough, the metal fitting comprising:
a metal-fitting fixing part; and
a buckle, wherein
the metal-fitting fixing part is formed of a plate-shaped metal member having a predetermined width;
the metal-fitting fixing part includes bent parts that are substantially parallel to each other and are provided on both upper and lower sides of a linking part, thereby forming an approximately letter-U shape, and a folded part is further provided at a tip end of the upper bent part such that the folded part is substantially parallel to the upper bent part and is folded back toward the linking part;
the metal-fitting fixing part is formed substantially in a letter-S shape with the letter-U shape and the folded part;
the metal-fitting fixing part is provided with a buckle-fixing part for fixing the buckle, which is formed by bending a tip end part of the folded part into a loop shape;
the buckle has an L-shaped part formed of long sides and short sides that are bent at substantially right angles at end parts of the long sides, tip ends of the short sides of the couple of L-shaped parts that are parallel to each other are bent at right angles respectively so as to be connected at a connecting part, and the short sides and the connecting part are formed into a substantially letter-U shape as a unified body;
each of tip end parts of the long sides of the L-shaped parts is bent at right angles for a predetermined length so as to face each other, being parallel to the connecting part, and predetermined lengths of the tip end parts of long sides of the L-shaped parts on both sides of the buckle are inserted into the buckle-fixing part such that the buckle is rotably supported by the buckle-fixing part.

16. The metal fitting for fixing the trough lid to the trough according to claim 15, wherein
a plurality of locking hooks facing toward an inside of the bent parts and standing at a sharp angle are formed on the lower bent part of the metal-fitting fixing part at positions that are predetermined distance away from each other in a width direction of the bent part.

## Amended claims

### Amended claims under Art. 19.1 PCT

1. (Amended) A trough comprising:
a trough storage part;
a male part that is provided on a first axial end of the trough storage part; and
a female part that is provided on a second axial end of the trough storage part, wherein
the trough includes side parts on both sides and a bottom part, forming a substantially letter-U shape in a cross section taken perpendicularly to an axial direction of the trough;
when interconnecting the adjacent troughs, the male part is inserted down into the female part such that the male part and the female part can be fitted with each other; and
a pair of through-holes vertically penetrating the bottom part of the trough are formed in the bottom part of the male part of the trough, each of the pair of through-holes being an opening having a straight shape that is long in a width direction, the pair of through-holes facing each other and being symmetric in a width direction of the trough.

2. (Deleted)

3. (Amended) The trough according to claim 1, wherein
when interconnecting the troughs by fitting the male part with the female part, protrusions protruding vertically from a top surface of the bottom part of the female part or from a rear surface of the bottom part of the male part are formed facing each other at corresponding positions on the top surface of the bottom part of the female part or on the rear surface of the bottom part of the male part, each of the positions being corresponding to each side of a proximity of an outer edge of a width direction of each of the through-holes.

4. (Amended) The trough according to claim 3, wherein
when interconnecting the troughs by fitting the male part with the female part, the protrusions protruding from the top surface of the bottom part of the female part and the protrusion protruding from the rear surface of the bottom part of the male part are formed at positions on the top surface of the bottom part of the female part and on the rear surface of the bottom part of the male part, respectively, each of the positions being corresponding to each side of the proximity of the outer edge of the width direction of each of the through-holes, such that the protrusions do not interfere with each other.

5. (Amended) The trough according to claim 3, wherein
the protrusion provided on the top surface of the bottom part of the female part is provided so as to include a part at which an amount of protrusion of the protrusion gradually increases outwardly from a center side of a width direction, facing the through-hole, within a range between a position corresponding to the rear surface of the through-hole and the outer edge on an outer side of the rear surface of the through-hole.

6. (Amended) The trough according to any one of claims 1, 3, 4, and 5, wherein
a pair of through-holes, which are different from the through-holes provided in the bottom part of the male part, are formed at least in the trough storage part, each of the through-holes being an opening having a straight shape that is long in a width direction, the pair of through-holes facing each other and being symmetric in a width direction of the trough.

7. (Amended) The trough according to claim 1, wherein
grooves that are parallel to the longitudinal direction of the trough are formed in the bottom part of the trough storage part at predetermined intervals in one or more lines, and a separator stands on the grooves.

8. (Amended) A method for fixing a cable to a trough structure using the troughs according to any one of claims 1, 3, 4, and 5, the method comprising:
forming a space between the rear surface of the bottom part of the male part and the top surface of the bottom part of the female part in the trough structure in which the troughs are interconnected by fitting the male part and the female part;
inserting the string-like member from an upper surface side of the bottom part of the male part into one of at least the pair of the through-holes that is on a first side of the trough width direction and taking out the string-like member from the through-hole on a second side of the width direction via the space between the rear surface of the bottom part of the male part and the top surface of the bottom part of the female part to the upper surface side of the bottom part of the male part; and
fixing the cable mounted inside the trough to the bottom part of the male part by using the string-like member.

9. The method for fixing the cable to the trough structure according to claim 8, wherein
the string-like member is a band-like member being curved in a predetermined direction with a predetermined curvature.

10. A structure for fixing a cable to a trough structure in which the cable is fixed to the trough structure that is formed by interconnecting a plurality of troughs, wherein
each of the plurality of troughs includes a trough storage part, a male part that is provided on a first axial end of the trough storage part, and a female part that is provided on a second axial end of the trough storage part;
when interconnecting the adjacent troughs, the male part is inserted down into the female part such that the male part and the female part can be fitted with each other;
each of the troughs has side parts on both sides and a bottom part, forming a substantially letter-U shape in a cross section taken perpendicularly to an axial direction of the troughs;
at least a pair of through-holes are formed in the bottom part of the male part at a predetermined position, being symmetrical in a width direction of the troughs;
at least either of a protrusion that is formed on a top surface of a bottom part of the female part so as to include a part at which an amount of protrusion thereof gradually increases outwardly from a center side of a width direction within a range between a position corresponding to a rear surface of the through-hole of the male part and an outer edge on an outer side of the rear surface of the through-hole, and a protrusion that protrudes from the rear surface of the bottom part and is formed at a position corresponding mutually to a proximity of an outer edge of an outer side of the through-hole in the rear surface of the bottom part of the male part is provided such that the protrusions do not interfere with each other;
the trough structure includes the troughs that are interconnected by fitting the male part with the female part, and the trough structure has a space created between the rear surface of the bottom part of the male part and the top surface of the bottom part of the female part;
a string-like member ties and covers the through-hole on one side of the width direction of the troughs, a space created by the space between the rear face side of the bottom part of the male part and the top surface of the bottom part of the female part, the through-hole on the other side of the width direction of the troughs, and an upper surface of the cable mounted on an upper surface of the bottom part of the male part so as to be fixed in a loop shape, thereby fixing the cable mounted inside the troughs to the bottom parts of the male parts of the multiple troughs at predetermined intervals.

11. The structure for fixing the cable to the trough structure according to claim 10, wherein
the trough structure is laid on a slope surface, and, with the cable being fixed to the troughs by the string-like member, a dead weight of the cable is supported in a direction parallel to the bottom parts of the troughs.

12. (Amended) The structure for fixing the cable to the trough structure according to claim 11, wherein
the trough structure includes the multiple troughs being interconnected with each other, the cable mounted inside the troughs is fixed to the multiple troughs being interconnected at a fitting part of the troughs by using the string-like member, and a trough lid is put over the trough structure.

13. A structure for fixing a trough lid to the trough structure, which includes the structure for fixing the cable to the trough structure according to claim 12, wherein
a metal fitting for fixing the trough lid includes a metal-fitting fixing part and a buckle;
each of predetermined front and back positions of the trough has a metal-fitting mounting part for mounting the metal fitting;
the metal-fitting mounting part is formed on an outer side of each of the side parts at an upper part of the trough with a predetermined thickness and a predetermined length and the metal-fitting fixing part of the metal fitting is mounted onto the metal-fitting mounting part;
the trough lid includes a buckle-fixing groove formed on a top surface of the trough lid on each side of a position corresponding, in an axial direction of the trough, to the metal-fitting mounting part; and
the buckle of the metal fitting is fixed into the buckle-fixing groove such that the trough lid put over the trough is fixed to the trough.

14. The structure for fixing the trough lid to the trough structure according to claim 13, wherein
the metal-fitting fixing part is formed of a plate-shaped metal member having a predetermined width;
the metal-fitting fixing part includes bent parts that are substantially parallel to each other and are provided on both upper and lower sides of a linking part, thereby forming substantially a letter-U shape, and a folded part is further provided at a tip end of the upper bent part such that the folded part is substantially parallel to the upper bent part and is folded back toward the linking part;
the metal-fitting fixing part is formed substantially in a letter-S shape with the letter-U shape and the folded part;
the metal-fitting fixing part is provided with a buckle-fixing part for fixing the buckle, which is formed by bending a tip end part of the folded part into a loop shape;
the buckle has an L-shaped part formed of long sides and short sides that are bent at substantially right angles at end parts of the long sides, tip ends of the short sides of the couple of L-shaped parts that are parallel to each other are bent at right angles respectively so as to be connected at a connecting part, and the short sides and the connecting part are formed into a substantially letter-U shape as a unified body;
each of tip end parts of the long sides of the L-shaped parts is bent at right angles for a predetermined length so as to face each other, being parallel to the connecting part, and predetermined lengths of the tip end parts of long sides of the L-shaped parts on both sides of the buckle are inserted into the buckle-fixing part such that the buckle is rotably supported by the buckle-fixing part;
the metal-fitting mounting part of the trough is placed between the pair of bent parts, which are substantially parallel to each other and formed in the metal-fitting fixing part of the metal fitting, so that the metal fitting is mounted onto the trough; and
when the trough lid is to be fixed to the trough by using the metal fitting, the buckle is rotated and the short sides and the connecting part are fitted into the buckle-fixing groove provided in the trough lid so that the trough lid is fixed to the trough.

15. (Deleted)

16. (Deleted)
